# EUROPEAN PATENT SPECIFICATION

(11) **EP 4 456 227 B1**
(45) Date of publication and mention of the grant of the patent: **02.12.2026**
(21) Application number: 23875184.6
(22) Date of filing: 04.10.2023
(51) Int. Cl.: H01M 10/04, B26F 1/12, B65H 29/00, G01N 21/84, G01N 21/89, G01N 21/88, G01N 21/894

(54) **ELECTRODE MARKING DEVICE**
ELEKTRODENMARKIERUNGSVORRICHTUNG
DISPOSITIF DE MARQUAGE D'ÉLECTRODE

(30) Priority: 05.10.2022 KR 20220127182
(43) Date of publication of application: 30.10.2024
(73) Proprietor: LG Energy Solution, Ltd., Seoul 07335 (KR)
(72) Inventor: HAN, Ki Deok, Daejeon 34122 (KR); SU, Jun Hyo, Daejeon 34122 (KR); HAN, Byoung Eun, Daejeon 34122 (KR); PARK, Su Wan, Daejeon 34122 (KR); JEON, Gi Yeong, Daejeon 34122 (KR); LEE, Jae Hwan, Daejeon 34122 (KR); KIM, June Hee, Daejeon 34122 (KR); SHIN, Jong Kwon, Daejeon 34122 (KR); SIM, Min Kyu, Daejeon 34122 (KR)
(74) Representative: BCKIP Part mbB
(86) International application number: PCT/KR2023/015183
(87) International publication number: WO 2024/076120

(56) References cited:
- EP-A1- 4 428 079
- WO-A1-2024/049127
- JP-A- 2015 133 259
- JP-A- 2015 210 923
- JP-A- 2018 146 580
- KR-A- 20210 126 842
- KR-A- 20220 051 699
- KR-B1- 101 158 853

## Description

### [Technical Field]

The present invention relates to an electrode marking apparatus. More specifically, the present invention relates to an electrode marking apparatus capable of accurately making a mark on a defective portion of an electrode regardless of the speed of movement of the electrode by comparing a real-time relative position value of a marking machine relative to the electrode with a coordinate of the defective portion.

### [Background Art]

With the development of technologies for mobile devices and an increase of the demand for mobile devices, the demand for secondary batteries is sharply increasing. Among secondary batteries, lithium secondary batteries have been widely used as energy sources of various types of electronic products as well as various types of mobile devices in terms of high energy density, a high operating voltage, and excellent preservation and lifespan characteristics thereof.

An electrode process of manufacturing electrodes of a lithium secondary battery includes a coating process of forming a positive electrode and a negative electrode by applying an active material and an insulating material to a surface of a metal electrode plate, which is a current collector, a roll press process of rolling the coated electrodes, a slitting process of cutting the rolled electrodes according to sizes, a notching process of forming tabs on the electrodes, etc.

When the tabs are formed in the notching process, a form of a secondary battery is achieved through an assembly process of interposing a separator between the positive electrode and the negative electrode to form an electrode assembly, stacking or folding the electrode assembly to be packed into a pouch, a can, or the like, and injecting an electrolyte. Thereafter, an activation process is performed to give battery characteristics by charging or discharging the assembled secondary battery, thereby obtaining a secondary battery as a finished product.

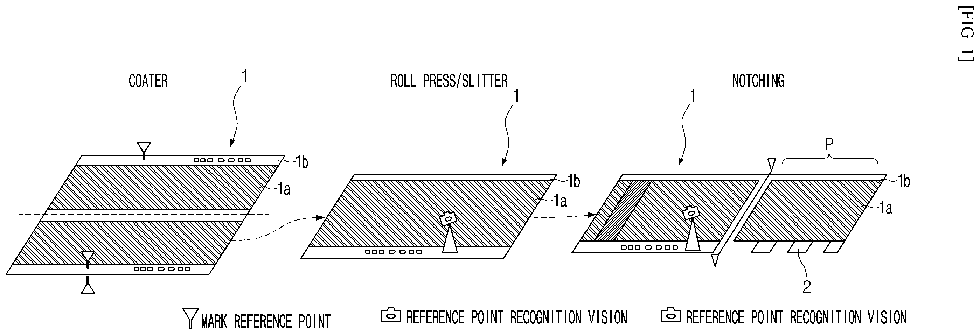

FIG. 1 illustrates a state of an electrode that goes through the electrode manufacturing process.

A coated electrode 1 is manufactured by coating a current collector with an electrode active material by a coater to form coated portions 1a. A reference point may be marked on an uncoated portion 1b of the current collector that is not coated with the electrode active material. Generally, both a surface of the electrode 1 and a surface opposite thereto are coated with the electrode active material. The coated electrode 1 is pressed by a press roll in the roll press process, and is cut in a longitudinal direction thereof by a slitter in the slitting process. Thereafter, in the notching process, the coated electrode 1 is punched by a press or the like to form electrode tabs 2. In the notching process, the electrode tabs 2 are formed for each unit electrode, which is to be manufactured as a battery cell, to be cut for each unit electrode or to be cut in a subsequent process. A width of each unit electrode corresponds to a pitch P processed by the press.

The electrode manufacturing process is performed by sequentially and repeatedly performing processes, i.e., a series of roll-to-roll processes, of moving an electrode unwound from an unwinder and winding the electrode around a rewinder. That is, the electrode is coated with the electrode active material while being moved from an unwinder to a rewinder of the coating process, and is wound around the rewinder, thus completing an electrode roll of the coating process. Next, the electrode roll is moved to a rewinder of the roll press process while being mounted on a rewinder of the roll press process. The electrode roll is wound around a rewinder of the roll press process, thus completing an electrode roll of the roll press process. Thereafter, the electrode roll is moved in a roll-to-roll state from an unwinder of a subsequent process (e.g., a second roll press process, the slitting process, the notching process or the like), and is wound around a rewinder of the subsequent process, thereby obtaining an electrode roll of the subsequent process. As described above, the electrode manufacturing process is performed by sequentially and repeatedly performing processes of moving an electrode unwound from an unwinder and winding the electrode around a rewinder, i.e., a series of roll-to-roll processes.

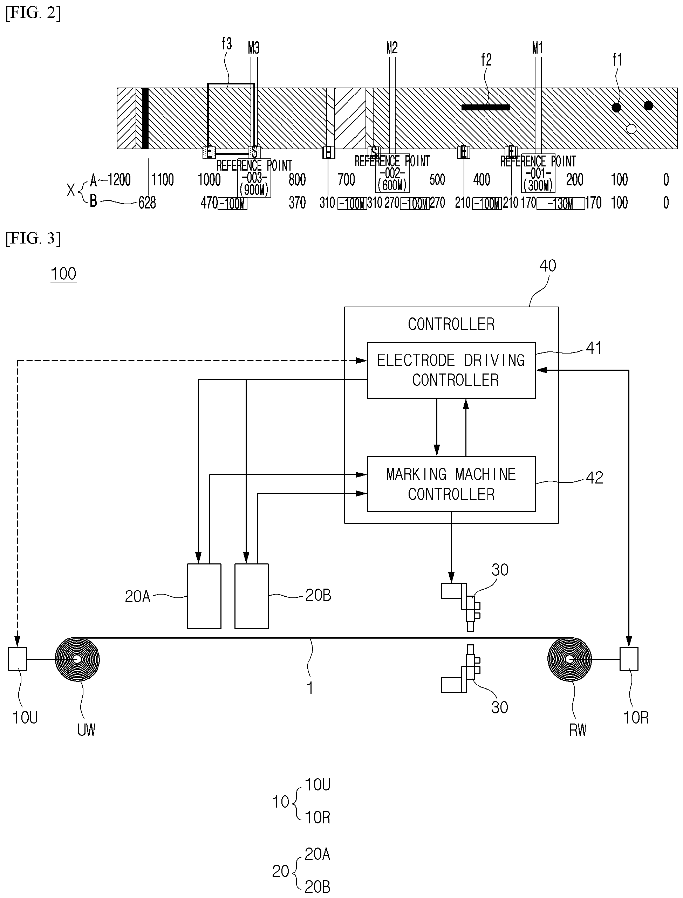

FIG. 2 illustrates a roll map RM in the electrode manufacturing process.

As described above, an electrode is moved in the roll-to-roll state in the coating process, the roll press process, the slitting process, etc. In the roll map RM, a result of simulating the movements of the electrode is displayed in the form of bars, and the coordinates of positions of the electrode in a longitudinal direction and a width direction are also displayed. In the roll map RM, information about defects, quality, and fractures of the electrode occurring in the electrode manufacturing process is displayed together with the coordinates, so that data related to quality or defects in the electrode manufacturing process may be easily and visually grasped at a glance.

Referring to FIG. 2, information about appearance defects such as pinhole defects f1 and a line defect f2 is visually displayed on coordinates at which the defects occurred. In addition, a mismatch portion f3 between a coated portion and an uncoated portion is also displayed. Other defects such as loading defects, and a discarded portion of an outermost side of the electrode are also displayed. Such a roll map may be made for each of the sub-processes described above.

Meanwhile, the coordinates of the defect on the electrode moved in the roll-to-roll state may be detected by various types of inspectors or measuring devices. A marking machine makes a mark on the defective portion of the electrode on the basis of the detected coordinates. For example, a point in time when the defective portion will arrive the marking machine may be calculated on the basis of a distance between the defect inspector and the marking machine and the speed of movement of the electrode, and the marking machine may mark the defective portion at the calculated point in time.

However, vibration may occur in an electrode transfer line or an impact may occur on the electrode moved by being pressurized by a press roll. In this case, the speed of movement of the electrode may not be constant and may change. In particular, when the movement of the electrode is stopped due to the breakage of the electrode transfer line and the electrode is moved again by connecting broken portions of the electrode, the speed of movement of the electrode may inevitably change during the stopping of the electrode transfer line and the restarting of the electrode transfer line. As described above, a point in time when the defect arrives the marking machine may be different from a set point in time due to a change of the speed of movement of the electrode. Accordingly, a position of the defective portion actually marked on the electrode by the marking machine is different from coordinates detected by an inspector.

When the defective portion is not accurately marked at a position with the coordinates detected by the defect inspector and a marking position changes, a non-defective portion of the electrode is likely to be removed in lieu of the defective portion at the marking position in a subsequent process.

In addition, when the defective portion is displayed on a roll map by referring to the marking of the defective portion, the position of the defective portion of the actual electrode may be different from that of the defective portion on the roll map. In this case, the reliability of the roll map providing detailed information of quality or defects decreases. When a subsequent process is performed on the basis of the information of the roll map with low reliability, an error may occur in the subsequent process due to a deviation in positions of a normal portion and the defective portion of the electrode. In addition, when the cause of a problem occurring in a secondary battery is traced back on the basis of data of defects of the roll map, it is difficult to accurately analyze the cause of the problem due to the error in the position of the defective portion.

Korean Patent Application Publication No. 10-2022-0051699 discloses an apparatus and a method for marking defective cells.

JP 2015-210923 A discloses an inspection device configured to convey an electrode material while winding around a take-up reel and to assign a mark for making the position of a defective portion in a coated part. The inspection device has a second conveyance roller arranged downstream of the position where the mark is assigned, and upstream of the take-up reel in the conveyance direction of the electrode material.

### [Disclosure of the invention]

### [Technical Problem]

The present invention relates to an electrode marking apparatus capable of accurately making a mark on a defective portion of an electrode by comparing a real-time relative position value of a marking machine relative to the electrode with a coordinate of the defective portion.

The present invention is directed to providing an electrode marking apparatus for efficiently making mark on a defective portion or a defective section of even an electrode with a plurality of electrode lanes.

### [Technical Solution]

To this end, the present invention provides an electrode marking apparatus in accordance with claim 1.

The present invention provides an electrode marking apparatus for an electrode moved between an unwinder and a rewinder, the electrode marking apparatus including: a position measuring device configured to obtain information about a position of the electrode in a longitudinal direction of the electrode according to an amount of rotation of the unwinder or the rewinder in the form of a coordinate in the longitudinal direction; at least one defect inspector configured to inspect the electrode to specify a defective portion, and connected to the position measuring device to obtain a coordinate of the defective portion in the longitudinal direction of the electrode; a marking machine installed behind the at least one defect inspector in a direction of movement of the electrode; and a controller configured to determine whether to perform marking by comparing a real-time relative position value of the marking machine relative to the moved electrode with the coordinate of the defective portion, in which the marking machine makes a mark on the defective portion of the electrode according to a defect marking signal from the controller.

The coordinate of the defective portion may be the sum of a first offset distance and an amount of winding of the electrode around the rewinder at a point in time when the defective portion is detected by the defect inspector, the first offset distance being a distance between the defect inspector and the rewinder.

The defect inspector obtains information about a position of the defective portion in a width direction of the electrode in the form of a coordinate in the width direction.

The real-time relative position value of the marking machine may be the sum of a second offset distance and an amount of winding of the electrode in real time at a point in time when the electrode passes through the marking machine, the second offset distance being a distance between the marking machine and the rewinder, and the controller may output the defect marking signal to the marking machine at a point in time when the real-time relative position value becomes greater than the coordinate of the defective portion.

The controller may include an electrode driving controller configured to control movement of the electrode from the unwinder to the rewinder, and connected to the position measuring device to obtain information about an amount of winding of the electrode around the rewinder, and a marking machine controller configured to determine whether to perform marking by the marking machine.

The marking machine controller may calculate the real-time relative position value of the marking machine by adding the second offset distance to the information about the amount of winding of the electrode received from the electrode driving controller, and output the defect marking signal to the marking machine at a moment when the calculated real-time relative position value becomes the coordinate of the defective portion.

The defect inspector may obtain the coordinate of the defective portion by adding a first offset distance to the information about the amount of winding of the electrode received from the electrode driving controller, and transmit the obtained coordinate of the defective portion to the marking machine controller, wherein the first offset distance is a distance between the defect inspector and the rewinder.

In an embodiment of the present disclosure, in the electrode marking apparatus, the defective portion may be a defective section in which defects occur consecutively or intermittently, the defect inspector may obtain a starting coordinate and an ending coordinate of the defective section in the longitudinal direction of the electrode, the controller may determine whether to start or end marking by comparing the real-time relative position value of the marking machine relative to the moved electrode with the starting coordinate and the ending coordinate of the defective section, and the marking machine may make marks on the electrode along the defective section according to a signal instructing to start or end marking, the signal being received from the controller.

The starting coordinate of the defective section may be the sum a first offset distance and an amount of winding of the electrode around the rewinder at a point in time when a first defect in the defect section is detected by the defect inspector, the first offset distance being a distance between the defect inspector and the rewinder, and the ending coordinate of the defective section may be the sum of the first offset distance and an amount of winding of the electrode around the rewinder at a point in time when a last defect in the defective section is detected by the defect inspector.

The real-time relative position value of the marking machine may be the sum of a second offset distance and an amount of winding of the electrode in real time at a point in time when the electrode passes through the marking machine, the second offset distance being a distance between the marking machine and the rewinder.

The controller may output a defect marking signal to the marking machine at a moment when the real-time relative position value becomes greater than the starting coordinate of the defective section, and stop the outputting of the defect marking signal to the marking machine at a point in time when the real-time relative position value becomes greater than the ending coordinate of the defective section.

The controller may include an electrode driving controller configured to control movement of the electrode from the unwinder to the rewinder, and connected to the position measuring device to obtain information about an amount of winding of the electrode around the rewinder, and a marking machine controller configured to determine whether to perform marking by the marking machine.

The marking machine controller may calculate the real-time relative position value of the marking machine by adding the second offset distance to the information about the amount of winding of the electrode received from the electrode driving controller.

In addition, the marking machine controller may output the defect marking signal to the marking machine at a moment when the calculated real-time relative position value becomes greater than the starting coordinate of the defective section, and stop the outputting of the defect marking signal to the marking machine at a moment when the calculated real-time relative position value becomes greater than the ending coordinate of the defective section.

The defect inspector may obtain the starting coordinate and the ending coordinate of the defective section by adding a first offset distance to the information about the amount of winding of the electrode received from the electrode driving controller, and transmit the obtained starting and ending coordinates of the defective section to the marking machine controller, the first offset distance being a distance between the defect inspector and the rewinder.

The electrode may include a plurality of electrode lanes in a width direction, one of marking machines may be provided for each of the plurality of electrode lanes, and each of the marking machines may continuously make marks along a defective section of each of the plurality of electrode lanes according to a signal instructing to start and end marking, the signal being received from the controller.

Another aspect of the present disclosure, which is not part of the claimed invention, provides a roll map generating system including: a position measuring device configured to obtain information about a position of an electrode in a longitudinal direction of the electrode according to an amount of rotation of an unwinder or a rewinder in the form of a coordinate in the longitudinal direction, when the electrode is moved between the unwinder and the rewinder; at least one defect inspector configured to inspect the electrode to specify a defective portion, and connected to the position measuring device to obtain a coordinate of the defective portion in the longitudinal direction of the electrode; a marking machine installed behind the at least one defect inspector in a direction of movement of the electrode, and configured to make a mark on the defective portion of the electrode according to a defect marking signal from a controller; the controller configured to output the defect marking signal to the marking machine at a moment when a real-time relative position value of the marking machine relative to the moved electrode becomes greater than the coordinate of the defective portion, and obtain as a marking coordinate a real-time relative position value of the marking machine at a point in time when the defect marking signal is output; and a roll map generating part configured to generate a roll map defined as a coordinate plane with coordinates of two axes, wherein the position of the moved electrode is displayed using coordinates on the coordinate plane, and the two axes include an axis in the longitudinal direction of the electrode and an axis in a width direction of the electrode, in which the roll map generating part may display the defective portion on the roll map, based on the marking coordinate received from the controller.

Another aspect of the present disclosure, which is not part of the claimed invention, provides a roll map generating system including: a position measuring device configured to obtain information about a position of an electrode in a longitudinal direction of the electrode according to an amount of rotation of an unwinder or a rewinder in the form of a coordinate in the longitudinal direction, when the electrode is moved between the unwinder and the rewinder; at least one defect inspector configured to inspect the electrode to specify a defective section, and connected to the position measuring device to obtain a starting coordinate and an ending coordinate of the defective section in the longitudinal direction of the electrode; a marking machine installed behind the defect inspector in a direction of movement of the electrode, and configured to make a mark on the electrode along the defect section according to a signal instructing to start and end marking, the signal being received from a controller; the controller configured to output a defect marking signal to the marking machine at a moment when a real-time relative position value of the marking machine relative to the moved electrode becomes greater than the starting coordinate of the defective section, stop the outputting of the defect marking signal at a moment when the real-time relative position value becomes greater than the ending coordinate of the defective section, and obtain a real-time relative position value of the marking machine as a marking starting coordinate when the defect marking signal is output, and a real-time relative position value of the marking machine as a marking ending coordinate when the outputting of the defect marking signal is stopped; and a roll map generating part configured to generate a roll map defined as a coordinate plane with two axes of coordinates, wherein the position of the moved electrode is displayed using coordinates on the coordinate plane, and the two axes include an axis in the longitudinal direction of the electrode and an axis in a width direction of the electrode, in which the roll map generating part may display the defective section on the roll map, based on the starting marking coordinate and the ending marking coordinate received from the controller.

The electrode may include a plurality of electrode lanes in the width direction, one of marking machines may be provided for each of the plurality of electrode lanes, and each of the marking machines may continuously make marks along a defective section of a corresponding electrode lane among the plurality of electrode lanes according to a signal instructing to start and end marking, the signal being received from the controller, and the roll map generating part may display the defective section of each of the plurality of electrode lanes on a roll map displaying each of the plurality of electrode lanes.

According to the present invention, a defective portion or a defective section of an electrode may be accurately marked regardless of the speed of movement of the electrode by comparing a real-time relative position value of a marking machine relative to the electrode with a coordinate of the defective portion or the defective section.

In addition, a defective section may be efficiently marked even in the case of an electrode with a plurality of electrode lanes. In particular, even when coordinate signals related to defective sections of several electrode lanes are received almost simultaneously, marking may be performed on each of the electrode lanes to easily identify defects.

In the present disclosure, a reliable roll map on which coordinate information of a defective portion or a defective section is accurately displayed may be obtained using the electrode marking apparatus.

### [Brief Description of the Drawings]

FIG. 1 is a schematic diagram illustrating a state of an electrode in an electrode manufacturing process.
FIG. 2 illustrates an example of a roll map in the electrode manufacturing process.
FIG. 3 is a schematic view of an electrode marking apparatus of a first embodiment of the present disclosure.
FIG. 4 is a schematic diagram illustrating a first offset distance and a second offset distance.
FIG. 5 is a schematic view of a configuration of a marking machine according to the present disclosure.
FIG. 6 is a schematic view of a roll map generating system of the present disclosure.
FIG. 7 is a schematic view of an example of a roll map generating part.
FIG. 8 is a schematic view of a roll map made by a roll map generating system of the present disclosure.
FIG. 9 is a schematic view of a defective section of a multi-lane electrode to which a defect tag is attached.
FIG. 10 is a schematic view of a roll map made by an electrode marking apparatus according to a second embodiment of the present disclosure.

### [Detailed Description]

Hereinafter, a configuration of the present invention will be described in detail with reference to the accompanying drawings and various embodiments. Embodiments described below are provided as examples to help the understanding of the present invention, the accompanying drawings are not drawn on actual scale to help the understanding of the present disclosure, and the sizes of some components may be exaggerated.

### (First Embodiment)

### <Electrode Marking Apparatus>

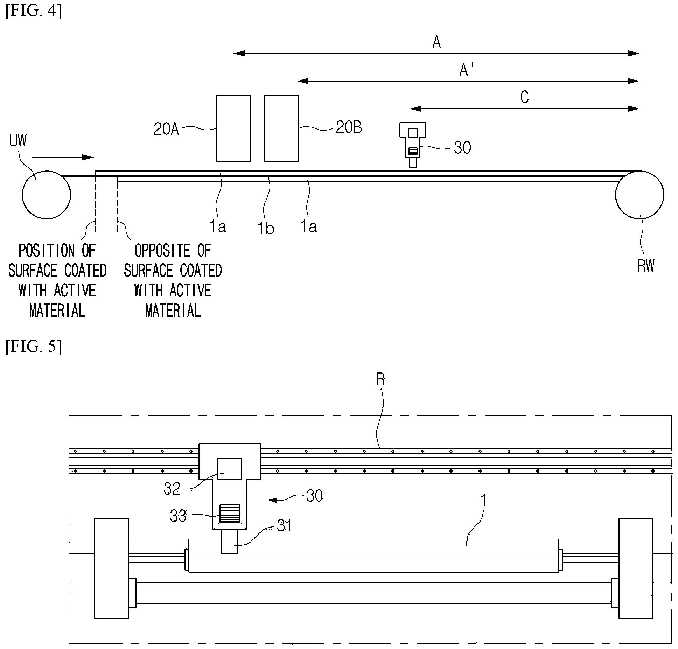

FIG. 3 is a schematic view of an electrode marking apparatus of a first embodiment of the present invention. FIG. 4 is a schematic diagram illustrating a first offset distance and a second offset distance. FIG. 5 is a schematic view of a configuration of a marking machine according to the present invention.

An electrode marking apparatus 100 of the present invention is a marking apparatus for an electrode 1 moved between an unwinder UW and a rewinder RW, and includes a position measuring device 10 configured to obtain information about a position of the electrode 1 in a longitudinal direction of the electrode 1 according to the amount of rotation of the unwinder UW or the rewinder RW in the form of a coordinate in the longitudinal direction; at least one defect inspector 20 configured to inspect the electrode 1 to specify a defective portion, and connected to the position measuring device 10 to obtain a coordinate of the defective portion in the longitudinal direction; a marking machine 30 installed behind the at least one defect inspector 20 in a direction of movement of the electrode 1; and a controller 40 configured to determine whether to perform marking by comparing a real-time relative position value of the marking machine 30 relative to the moved electrode 1 with a coordinate of the defective portion.

The present invention provides the electrode marking apparatus 100 for making a mark on a defective portion of the electrode 1 moved in the roll-to-roll state between the unwinder UW and the rewinder RW.

The electrode 1 includes a coated portion 1a coated with an electrode active material, and an uncoated portion 1b which is not coated with the electrode active material, and thus in which a surface of a current collector is exposed. In addition, the electrode 1 may include only one electrode lane in a width direction of the current collector, but may include two or more electrode lanes. An electrode with a plurality of electrode lanes will be referred to herein as a multi-lane electrode. The electrode marking apparatus 100 of the present invention is also applicable to multi-lane electrodes. In a multi-lane electrode, an uncoated portion 1b and a coated portion 1a are repeatedly arranged in a width direction of the multi-lane electrode. The marking machine 30, which will be described below, marks a defective portion or a defective section on the uncoated portion 1b of the electrode 1.

The electrode 1 may be a single-sided electrode in which only one of the surface of the current collector and a surface opposite thereto is coated with an active material. Alternatively, the electrode 1 may be a double-sided electrode in which both the surface and the opposite surface of the current collector are coated with the active material. The electrode marking apparatus 100 of the present invention may inspect not only the surface and the opposite surface of the single-sided electrode, but also the surface and the opposite surface of the double-sided electrode, and mark a defective portion thereon.

The electrode marking apparatus 100 of the present invention is applicable to various processes, such as the electrode coating process, the roll press process, the slitting process, and the notching process described above, in which the electrode 1 is moved in the roll-to-roll state between the unwinder UW and the rewinder RW and a defective portion is detected when the electrode 1 is inspected.

The electrode marking apparatus 100 in which a defective portion is marked in the electrode coating process is illustrated in the embodiment of FIG. 3, but the present invention is not limited thereto. That is, a defective portion may be marked by the electrode marking apparatus 100 in the roll press process, the slitting process, etc.

The electrode marking apparatus 100 of the present invention includes the position measuring device 10, the defect inspector 20, the marking machine 30, and the controller 40.

In a roll-to-roll process, the electrode 1 is mounted between the unwinder UW and the rewinder RW. The electrode 1 is released from the unwinder UW, and is coated with the active material by a coater in a coating process. After the coating of the active material, a defective portion is marked on the uncoated portion 1b of the electrode 1. Because the electrode 1 is moved by the rotation of the unwinder UW and the rewinder RW, the position of the electrode 1 in the longitudinal direction may be specified according to the amount of rotation of the unwinder UW or the rewinder RW. The position measuring device 10 may obtain information about the position of the electrode 1 in the longitudinal direction in the form of a coordinate in the longitudinal direction. For example, when the electrode 1 is 1200 meters long, a coordinate '0' obtained by the position measuring device 10 indicates the start of the electrode 1 and a coordinate '1200' obtained by the position measuring device 10 indicates the end of the electrode 1. A rotary encoder 10U or 10R installed in the unwind encoder UW or the rewinder RW may be used as the position measuring device 10. Generally, the rotary encoders 10U and 10R may be installed in a motor driver that drives the unwinder UW and the rewinder RW to detect a moving distance of an electrode according to the number of rotations (amount of rotation) of a motor. Therefore, when the electrode 1 is moved between the unwinder UW and the rewinder RW, a moving distance of the electrode 1 may be detected by the rotary encoders 10U and 10R. For convenience of description, FIG. 3 illustrates that the rotary encoder 10U of the unwinder UW and the rotary encoder 10R of the rewinder RW are respectively disposed outside the unwinder UW and the rewinder RW, but the encoders 10U and 10R may be respectively included in the unwinder UW and the rewinder RW.

To obtain a coordinate in the longitudinal direction, the rotary encoder 10U of the unwinder UW or the rotary encoder 10R of the rewinder RW may be used. However, a roll map to be described below may be made after the electrode 1 is completely wound around the rewinder RW to complete the winding of the electrode in the form of a roll, i.e., after all pieces of coordinate data and inspection data in the longitudinal direction of the electrode 1 are input. Therefore, it is desirable to use the rotary encoder 10R installed in the rewinder RW as the position measuring device 10 to generate a roll map. In the present specification, marking a defect of an electrode and making a roll map will be described with respect to a coordinate obtained using the rewinder RW.

The amount of rotation of the above-described unwinder UW is the same as the amount of winding of the electrode 1 around the unwinder UW, and the amount of rotation of the rewinder RW is the same as the amount of winding of the electrode 1 around the rewinder RW. In the present embodiment, the coordinate of the electrode 1 are obtained with respect to the rewinder RW, and thus the coordinate of the position of the electrode 1 may be expressed according to the amount (meters) of winding of the electrode 1 around the rewinder RW.

The defect inspector 20 may inspect the electrode 1 to specify a defective portion and be connected to the position measuring device 10 to obtain a coordinate of the defective portion in the longitudinal direction of the electrode 1.

Such a defect may be an appearance defect such as a pinhole defect or a line defect. In this case, the defect inspector 20 may be an electrode appearance inspection device (e.g., a vision camera). However, defects described herein are not limited to simple appearance defects. That is, when conditions required in a process are not satisfied, parts of the electrode related thereto may also be regarded as defects.

For example, when the electrode 1 is broken into pieces, and thus the pieces are bonded together using a tape, seams between the pieces of the electrode 1 may be regarded as defects.

In the electrode coating process, a defect may occur when the amount of loading (coating) an electrode active material is not within a set range. In this case, the defect inspection device 20 may be a loading amount measuring device.

In the roll press process, a defect may occur when a thickness to which the electrode 1 is rolled by a press roll is out of the set range. In this case, the defect inspection device 20 may be a thickness measuring device.

Alternatively, a dimension or width of the electrode that is not in a set range of values may be regarded as a defect. In this case, the defect inspector 20 may be a dimension and width measuring device.

Such defects may be directly marked on an real electrode using the marking machine 30. Alternatively, a defective portion may be visually displayed at coordinates on a roll map, which will be described below, using a different color, contrast, saturation or shape.

A defective portion of a real electrode may be marked on the uncoated portion 1b of the electrode 1. However, because the roll map is a virtual coordinate plane representing a real electrode, the defective portion may be directly displayed at a position on the coated portion 1a of the roll map corresponding to coordinates of the defective portion obtained by the electrode marking apparatus 100 of the present invention.

The defective portion may include defects, such as pinhole defects, intermittently occurring in the form of spots in the longitudinal direction of the electrode. In this case, the defective portion may be intermittently marked on an uncoated portion 1b of the electrode corresponding to a position thereof by obtaining the coordinates of the defects.

The defective part may appear long in length similar to a line defect. In addition, a defective section may occur in the longitudinal direction of the electrode 1 similar to a loading amount defect or a rolling thickness defect. Otherwise, defects occurring intermittently such as spot defects may be concentrated at narrow intervals.

In this way, in the case of a defective section in which defects occur continuously or intermittently, a starting coordinate and an ending coordinate of the defective section may be obtained to mark the defective section on the electrode.

In the present embodiment, it is assumed that a defective portion includes defects such as spot defects occurring intermittently at intervals.

As described above, the type of the defect inspector 20 is not limited as long as it is capable of inspecting a defect and specifying defects or a defective section. Therefore, at least one defect inspector 20 is provided according to the type of defect. In addition, when there are multiple electrode lanes, one defect inspector 20 may be provided for each of the electrode lanes.

The defect inspector 20 may be connected to the position measuring device 10 to obtain a coordinate of a defective portion in the longitudinal direction of the electrode. Referring to FIG. 3, the controller 40 is connected to the position measuring device 10 of either the unwinder UW or the rewinder RW. In the present specification, the components of the electrode marking apparatus 100 may be connected to each other. The term "connection" between the components should be understood to mean that the components are connected to transmit and receive data therebetween through wired communication or wireless communication. The position measuring device 10 may be connected to the defect inspector 20 through the controller 40 as in the present embodiment. Therefore, when the electrode 1 passes through the defect inspector 20, the defect inspector 20 may inspect the electrode 1 and receives information about the amount of winding of the electrode 1 in real time at a point in time when the electrode 1 is inspected through the controller 40 or directly from the position measuring device 10. A coordinate of the defective portion in a longitudinal direction thereof may be obtained on the basis of the amount of winding of the electrode 1 at a point in time when a defective portion is detected by the defect inspector 20.

In FIG. 3, when the defect inspector 20 inspects the electrode 1 and obtains data about the defective portion, the position of the defective portion of the electrode 1 is detected by the position measuring device 10 of the rewinder RW. However, the corresponding portion of the electrode 1 at a point in time when the defective portion is detected has yet to arrive at the rewinder RW. That is, a coordinate of the defective portion should be a coordinate thereof when the defective portion actually arrives at the rewinder RW. Therefore, as shown in FIG. 4, the coordinate of the defective portion is the sum of the amount of winding of the electrode 1 around the rewinder RW at a point in time when the defective portion is detected by the defect inspector 20 and a first offset distance (A, A') that is the distance between the defect inspector 20 and the rewinder RW. The first offset distances (A, A') may vary according to an installation position of each inspector. As shown in FIG. 4, when the defect inspector 20 includes an A inspector 20A (e.g., an electrode appearance inspector) and a B measuring device 20B (e.g., a loading amount measuring device), a first offset distance A of the A inspector 20A may be 15 m, and a first offset distance A' of the B measuring device 20B may be 10 m.

Meanwhile, the defect inspector 20 may be classified as a spot inspector or a scan inspector according to a method of detecting a defective portion by the defect inspector 20.

The spot inspector identifies a defective portion from an image obtained by photographing the electrode per frame. The spot inspector matches each captured image with the amount of winding of the electrode 1 (meters). Accordingly, the coordinate of the defective portion may be calculated by adding the first offset distance to the amount of winding of the electrode 1 around the rewinder RW in a frame of a captured image of the defective portion. For example, when in an n^{th} frame of the captured image, the amount of winding of the electrode 1 around the rewinder RW is 500.5 m and a pinhole defect occurs in the captured image, a coordinate of the pinhole defect in the longitudinal direction is 515.m that is the sum of the first offset distance of 15 m to the amount of winding.

The scan inspector is an example of the defect inspector 20 that identifies a defective portion from scan data obtained by scanning the electrode 1 in units of a certain length. A coordinate of the defective portion in the longitudinal direction may be obtained by adding the first offset distance to the amount of winding of the electrode 1 around the rewinder RW at a point in time when the defective portion is scanned.

Meanwhile, the defect inspector 20 may obtain information about a position of the defective portion in a width direction of the electrode 1 in the form of a coordinate in the width direction.

The electrode 1 has a certain length and width, and thus may be expressed as a coordinate plane with two axes of coordinates, i.e., an axis in the longitudinal direction and an axis in the width direction. A representative example of the coordinate plane is a roll map described below. In the electrode marking apparatus 100 of the present invention, a coordinate on the axis in the longitudinal direction, i.e., a coordinate in the longitudinal direction of the electrode, is obtained by the position measuring device 10. On the other hand, a coordinate on the axis in the width direction axis, i.e., a coordinate in the width direction of the electrode, may be obtained by the defect inspector 20. The above-described spot inspector is capable of obtaining a coordinate of a defective portion in the width direction from an image captured per frame. For example, the coordinate of the defective portion in the width direction may be measured by dividing the captured image into parts at regular intervals horizontally and vertically and measuring the distance from an edge of the captured image to the defective portion. In addition, the size of the defective portion may be identified by calculating an area of each of the parts divided from the captured image. A program for detecting the size or position of a defective portion of a captured image is known, and thus a detailed description thereof is omitted here.

Alternatively, a program for scanning and inspecting the appearance of the electrode 1 in the entire width direction thereof may be stored in the scan inspector. When the scan inspector is moved in the width direction of the electrode 1, the electrode 1 is moved in the longitudinal direction, and thus the scan inspector may scan the electrode 1 in units of certain lengths in the entire width direction as described above. Several tens to several thousands of pieces of scan data may be collected by the scan inspector in the longitudinal direction and the width direction of the electrode 1. The coordinate of the defective portion in the width direction may be obtained from the scan data.

The obtained coordinate of the defective portion in the width direction and a marking coordinate in the longitudinal direction that is obtained by the marking machine 30, which will be described below, may be transmitted to the roll map generating part 50 and displayed on a coordinate space of a roll map.

Referring to FIG. 3, the marking machine 30 is provided behind the defect inspector 20 in a direction of movement of the electrode 1.

In the present embodiment, it is assumed that a defective portion is marked on an electrode with one electrode lane, and thus one marking machine 30 is provided. However, in order to make marks on a multi-lane electrode with a plurality of electrode lanes, a plurality of marking machines 30 may be installed to correspond to the number of the electrode lanes.

For example, an inkjet type ink marking machine, a laser type laser marking machine, or a punching type marking machine may be used as the marking machine 30 but embodiments are not limited thereto. An appropriate marking machine may be selected and used in a range in which the visibility of marking points are excellent and the electrode 1 is not damaged. When a laser or punching type marking machine is used, the electrode 1 may be damaged, and thus care should be taken when marking is performed.

An example of an ink marking machine is shown in FIG. 5. Referring to FIG. 5, the marking machine 30 includes a marking part (nozzle part) 31 connected to an ink supply unit (not shown). The marking machine 30 further includes a vision camera 32 to distinguish a coated portion 1a and an uncoated portion 1b from each other. The vision camera 32 may identify a boundary between the coated portion 1a and the uncoated portion 1b to allow the marking part 31 to make a mark on a certain position on the uncoated portion 1b. The ink marking machine 30 may include a lighting device 33 so that the vision camera 32 may easily identify the coated portion 1a and the uncoated portion 1b.

When a width of the electrode 1 changes according to the type of the electrode 1 or the number of electrode lanes, the marking machine 30 may be configured to be movable according to a change in the width of the electrode 1. For example, the marking machine 30 may be movable along a guide axis R installed on the electrode 1 in the width direction of the electrode 1.

As shown in FIG. 4, when the electrode 1 is a double-sided electrode, the defect inspector 20 and the marking machine 30 may be installed on a surface of the electrode 1 and a surface opposite thereto, respectively. In the coating process, a defect is marked after the coating of an active material. FIG. 4 illustrates that a surface of the electrode 1 and a surface opposite thereto are coated with the active material before defect inspection and marking are performed. FIG. 3 illustrates that a defective portion is marked both on the surface and the opposite surface of the electrode 1 by the electrode marking apparatus 100 of the present invention. However, FIG. 3 is only provided to describe an arrangement relationship between the marking machine 30 and the electrode 1, and actually, the defective portion may be sequentially marked on the surface and the opposite surface of the electrode 1 according to the layout of factory facilities. For example, first, the surface of the electrode 1 may be coated with an electrode active material and be dried, the marking machine 30 may mark a defective portion on the surface of the electrode 1, the electrode may be continuously driven, the opposite surface of the electrode 1 may be coated with the electrode active material and be dried, and thereafter, the marking machine 30 may mark the defective portion on the opposite surface of the electrode 1. In this case, according to a driving path of the electrode 1, the defective portion may be marked by disposing the marking machines 30 on the surface and the opposite surface of the electrode 1. Alternatively, when the surface and the opposite surface of the electrode 1 are sequentially coated with the electrode active material, the defective portion may be marked both on the surface and the opposite surface of the electrode 1 by one marking machine 30.

The controller 40 may compare a real-time relative position value of the marking machine 30 relative to the electrode 1 moved between the unwinder UW and the rewinder RW with a coordinate of the defective portion to determine whether to perform marking.

In order to mark the defective portion, the position of the marking machine 30 relative to the moved electrode 1 should be identified. That is, a real-time position of the marking machine 30 should be identified so that the marking machine 30 may mark the defective portion at a point in time when the defective portion passes through the marking machine 30. Of course, as shown in FIG. 3, the marking machine 30 is installed behind the defect inspector 20 in the longitudinal direction of the electrode 1 to be spaced a certain distance (the second offset distance C) from the rewinder RW. That is, a position of the marking machine 30 installed on an electrode is fixed. Referring to FIG. 4, in the present embodiment, the second offset distance C is 5 m.

As described above, the position of the marking machine 30 is fixed but the electrode 1 is continuously wound around the rewinder RW as the electrode 1 passes under the marking machine 30, a position of the marking machine 30 relative to the electrode 1 that is being moved continuously changes. That is, a relative position value of the marking machine 30 relative to the electrode 1 changes in real time as the electrode 1 is being wound. The controller 40 of the present invention may identify a real-time relative position value of the marking machine 30 relative to the electrode 1 and compare the real-time relative position value with a coordinate of a defective portion obtained by the defect inspector 20 to determine whether to perform marking. As described above, the real-time relative position value of the marking machine 30 may be regarded as a function of the amount of winding of the electrode 1 in real time at a point in time when the electrode 1 passes through the marker 30. However, the amount of winding of the electrode 1 around the rewinder RW at a point in time when the electrode 1 passes through the marking machine 30 should not be understood as the real-time relative position value of the marking machine 30. Because the marking machine 30 is spaced the second offset distance C from the rewinder RW, the real-time relative position value of the marking machine 30 is a value obtained by adding the second offset distance C to the amount of winding of the electrode 1 around the rewinder RW at the point in time when the electrode 1 passes through the marking machine 30.

The controller 40 may receive information about the amount of winding of the electrode 1 in real time from the position measuring device 10, and thus may continuously identify the amount of winding of the electrode 1 at points in time when the electrode 1 passes through the marking machine 30. Accordingly, the controller 40 may also identify a real-time relative position value of the marking machine 30 relative to the electrode 1.

Specifically, the controller 40 outputs a defect marking signal to the marking machine 30 at the moment when the real-time relative position value becomes greater than the coordinate of the defective portion. The marking machine 30 may make a mark on the defective portion of the electrode 1 according to the defect marking signal from the controller 40.

The moment when the real-time relative position value becomes greater than the coordinate of the defective portion should be understood to mean the moment when the defective portion of the electrode passes through the marking machine 30. That is, when the coordinate of the defective portion, which is the sum of the first offset distance and the amount of winding of the electrode 1 around the rewinder RW at a point in time when a defect is detected by the defect inspector 20, is 515.5 m, the marking machine 30 starts marking at the moment when the sum of the second offset distance and the amount of winding of the electrode 1 around the rewinder RW at the moment when the defective portion of the electrode 1 passes through the marking machine 30 becomes greater than 515.5 m. As described above, in the present invention, whether to perform marking is determined by comparing a real-time relative position value of the marking machine 30 with a coordinate of a defective portion calculated on the basis of the amount of winding of an electrode. Therefore, there is no need to consider the speed of movement of the electrode 1 in determining whether to perform marking. In addition, whether to perform marking is not influenced by a change in the speed of movement of the electrode 1 due to the breakage of the electrode 1 or even when broken pieces of the electrode 1 are joined and the resultant electrode 1 is moved again. That is, information about the amount of winding of the electrode 1 around the rewinder RW may always be uniform in proportion to the amount of rotation of the rewinder RW even when any event occurs during the movement of the electrode 1. Therefore, the marking machine 30 may accurately make a mark on a defective portion of the electrode 1 in real time regardless of the speed of movement of the electrode 1.

The controller 40 obtains a real-time relative position value of the marking machine 30 as a marking coordinate at a point time when the defect marking signal is output. Generally, the real-time relative position value matches the coordinate of the defective portion. However, actually, signal transmission may be delayed according to a communication state between the controller 40 and the defect inspector 20. Accordingly, the coordinate of the defective portion may be changed by a degree of the delay of the signal transmission. That is, there may be a slight difference between the real-time relative position value and the coordinate of the defective portion. The defective portion need to be displayed at coordinates of an actual electrode on a roll map to be described below that are actually marked by the marking machine 30. Therefore, the controller 40 may transmit the marking coordinate to the roll map generating part 50 to be described below, so that the defective portion may be displayed on the roll map on the basis of the marking coordinate.

The controller 40 is connected to the position measuring device 10, the defect inspector 20, and the marking machine 30 to perform data communication therewith. The controller 40 is also connected to the roll map generating part 50, which will be described below, to perform data communication therewith.

The controller 40 may include both a function of controlling the driving of the electrode 1 between the unwinder UW and the rewinder RW and a function of controlling the marking machine 30. The controller 40 may be configured as an integrated controller 40 in which these functions are integrated. In the embodiment of FIG. 3, an example of a detailed configuration of the controller 40 is illustrated. Referring to FIG. 3, the controller 40 includes an electrode driving controller 41 and a marking machine controller 42.

The electrode driving controller 41 controls the movement of the electrode 1 from the unwinder UW to the rewinder RW and is connected to the position measuring device 10 to obtain information about the amount of winding of the electrode 1 around the rewinder RW.

The marking machine controller 42 determines whether to perform marking by the marking machine 30.

The electrode driving controller 41 and the marking machine controller 42 are connected to each other to perform data communication.

The electrode driving controller 41 may be a PLC controller that controls the movement of the electrode 1 when the electrode 1 is moved in the roll-to-roll state between the unwinder UW and the rewinder RW. The electrode driving controller 41 is connected to the position measuring device 10. Accordingly, the electrode driving controller 41 may obtain information about the amount of winding of the electrode 1 around the rewinder RW in real time, and transmit the information to the defect inspector 20 and the marking machine controller 42. As described above, the defect inspector 20 may calculate a coordinate of the defective portion in the longitudinal direction by adding the first offset distance to the information about the amount of winding of the electrode 1 received from the electrode driving controller 41. The defect inspector 20 transmits the calculated coordinate of the defective portion to the marking machine controller 42.

The marking machine controller 42 calculates a real-time relative position value of the marking machine 30 by adding the second offset distance C to the information about the amount of winding of the electrode 1 received from the electrode driving controller 41. In addition, the marking machine controller 42 outputs a defect marking signal to the marking machine 30 at the moment when the calculated real-time relative position value of the marking machine 30 becomes greater than the coordinate of the defective portion transmitted from the defect inspector 20.

The marking machine 30 makes a mark on the defective portion of the electrode 1 according to the defect marking signal from the marking machine controller 42.

The marking machine controller 42 obtains a real-time relative position value of the marking machine 30 as a marking coordinate at a point in time when the defect marking signal is output, and transmits the real-time relative position value to the electrode driving controller 41. The electrode driving controller 41 transmits the marking coordinate to the roll map generating part 50 to be described below.

### <Roll map generating System>

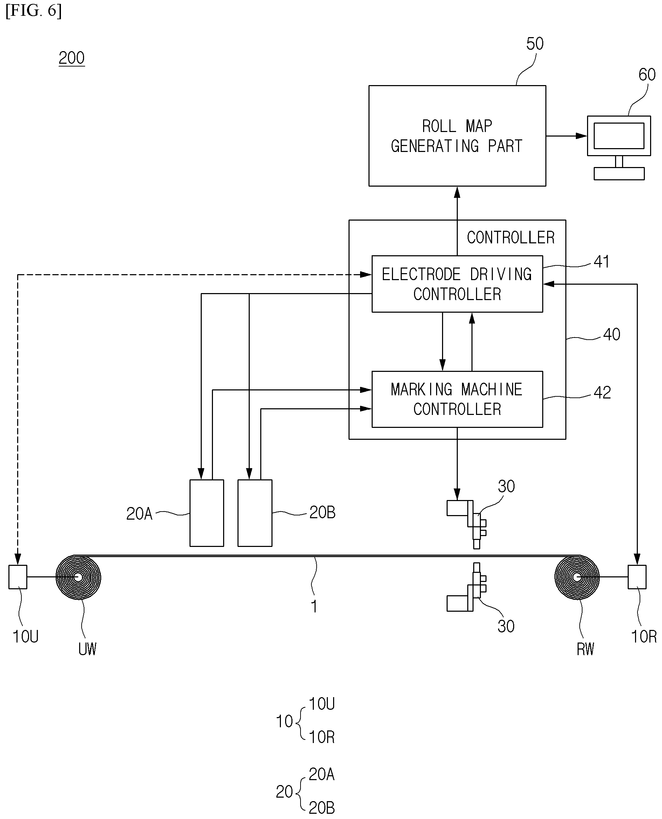

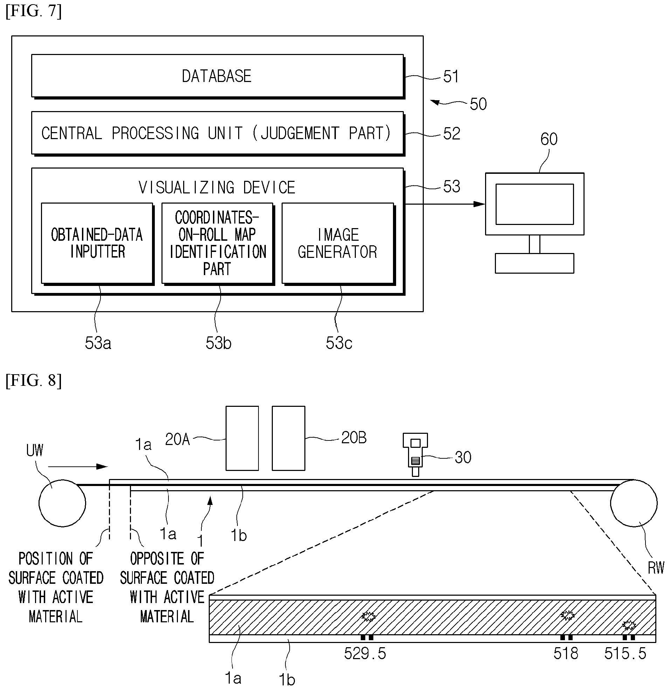

FIG. 6 is a schematic view of a roll map generating system, which is not part of the claimed invention. FIG. 7 is a schematic view of an example of the roll map generating part 50. FIG. 8 is a schematic view of a roll map made by the roll map generating system.

The roll map generating system 200 includes a position measuring device 10, a defect inspector 20, a marking machine 30, a controller 40, and a roll map generating part 50.

The position measuring device 10, the defect inspector 20, the marking machine 30, and the controller 40 constitute the electrode marking apparatus 100 described above. The roll map generating system 200 further includes a roll map generating part 50. That is, the roll map generating system 200 generates a roll map using the electrode marking apparatus 100. As described above, the controller 40 includes an electrode driving controller 41 and a marking machine controller 42.

As described above, when the electrode 1 is moved between the unwinder UW and the rewinder RW, the position measuring device 10 obtains information about a position of the electrode 1 according to the amount of rotation of the unwinder UW or the rewinder RW in the form of a coordinate in the longitudinal direction of the electrode 1.

The defect inspector 20 inspects the electrode 1 to specify a defective portion, and is connected to the position measuring device 10 to obtain a coordinate of the defective portion in the longitudinal direction of the electrode 1. As described above, the coordinate of the defective portion is a value obtained by adding a first offset distance (A,A'), which is a distance from the defect inspector 20 to the rewinder RW, to the amount of winding of the electrode 1 around the rewinder RW at the point in time when the defective portion is detected.

The marking machine 30 is installed behind the defect inspector 20 in the direction of movement of the electrode 1, and the defective portion is marked on the electrode 1 according to a defect marking signal from the controller 40. The marking machine 30 is, for example, an ink marking machine.

The controller 40 outputs a defect marking signal to the marking machine 30 at the moment when a real-time relative position value of the marking machine 30 relative to the moved electrode 1 becomes greater than the coordinate of the defective portion. The real-time relative position value of the marking machine 30 is a value obtained by adding a second offset distance C, which is a distance between the marking machine 30 and the rewinder RW, to the amount of winding of the electrode 1 in real time at a point in time when the electrode 1 passes through the marking machine 30. The marking machine controller 42 of the controller 40 calculates the real-time relative position value. In addition, the marking machine controller 42 receives a coordinate of a defective portion from the defective inspection device 20. The marking machine controller 42 outputs a defect marking signal to the marking machine 30 at the moment when the real-time relative position value of the marking machine 30 becomes greater than the coordinate of the defective portion. In addition, the marking machine controller 42 obtains as a marking coordinate the real-time relative position value of the marking machine 30 at a point time when the defect marking signal is output. The obtained marking coordinate is transmitted, for example, by the electrode driving controller 41, which is a PLC controller, and the electrode driving controller 41 transmits the marking coordinate to the roll map generating part 50.

The roll map generating system 200 includes the roll map generating part 50.

The roll map generating part 50 generates a roll map that simulates the electrode 1 moved in the roll-to-roll state. As shown in FIG. 2, the roll map may be defined as a coordinate plane with two axes of coordinates, i.e., an axis in the longitudinal direction of the electrode 1 and an axis in the width direction of the electrode 1. On the roll map, a position of the moved electrode 1 is displayed using coordinates on the coordinate plane. The roll map generating part 50 may display the defective portion on the roll map, based on the marking coordinate received from the controller 40 (the electrode driving controller 41).

The roll map generating part 50 may include a database 51 that stores data obtained from either the position measuring device 10 or the defect inspector 20 and the controller 40 or that stores data about the quality, dimensions, etc., of normal electrodes. The roll map generating part 50 may include a central processing unit (CPU) 52 that processes obtained data and may instruct a visualizing device 53 included in the roll map generating part 50 to visualize the processed data.

The roll map generating part 50 includes the visualizing device 53 configured to define a visualization area in which a coordinate plane of a roll map simulating the electrode 1 is to be formed and to visually display a coordinate in the longitudinal direction of the electrode 1, a coordinate in the width direction of the electrode 1, and various types of inspection data on the defined visualization area. The visualizing device 53 may visualize and display various types of inspection data such as data about a defective portion at a position corresponding to coordinates (e.g., marking coordinates) at which the inspection data is obtained. The visualizing device 53 may be connected to the CPU 52 and visualize and display inspection data and coordinate data according to an instruction from the CPU 52.

Referring to FIG. 7, the visualizing device 53 may include an obtained-data inputter 53a, a coordinates-on-roll map identification part 53b, and an image generator 53c.

The obtained-data inputter 53a receives data from the CPU 52.

The coordinates-on-roll map identification part 53b may define a visualization area on which a roll map is to be formed and define coordinates of pixels in the visualization area for each data element of obtained source data. In this case, when data about the specifications, e.g., a lot number, length, width, etc., of an electrode roll is input to the controller 40, a server or the like through registration of information about the electrode roll, the coordinates-on-roll map identification part 53b may calculate and determine the visualization area of the roll map from data about the size of the electrode 1 according to a certain scale transformation scale. Alternatively, the visualization area of the roll map may be determined by calculating the visualization area from coordinate data of the electrode 1 in the longitudinal direction and the width direction according to a certain transformation scale.

The coordinates-on-roll map identification part 53b may map obtained data about quality or defects and location data of the electrode 1 (in the width direction and the longitudinal direction), and allocate the mapped data on the visualization area (the roll map) according to the coordinates of the pixels.

The image generator 83c may express elements of the mapped data allocated to the coordinates of the pixels in the visualization area using at least one legend. The legend refers to various shapes such as circles, quadrangles, and triangles displayed on the visualization area or the shapes to which colors are assigned. Therefore, the image generator 53c visually displays various types of data related to quality or defects at the coordinates of pixels (coordinates on the roll map) corresponding to pieces of location data of the actual electrode 1 on the visualization area of the roll map using shapes, forms, and colors designated for each of the various types of data, thereby generating a roll map.

In addition, based on data stored in a storage such as the database 51, data corresponding to a specific range of the roll map may be retrieved from the storage and displayed on a screen (image generation) in association with the specific range. In this case, the CPU 52 may instruct the visualizing device 53 to visualize and display inspection data identified as abnormal in comparison with normal data stored in the database 51 to be distinguished from other data.

The setting of the size of the visualization area or the generation of an image by identifying coordinates on the visualization area may be performed by various types of general user interfaces or various programs or processing tools related to data allocation, processing, analysis and visualization. Accordingly, the roll map generating part 50 described above is only an example, and thus is not limited by the above-described embodiment.

The roll map generating part 50 may be, for example, a data processing system such as a manufacturing execution system (MES) or a component of the data processing system. The data processing system is a system (including hardware or software) that performs inputting, processing, outputting, communication, etc., to perform a series of operations on data. A manufacturing process of the electrode 1 employs an electrode MES, an assembling MES, etc., for managing a series of electrode manufacturing processes such as coating, pressing, and slitting. Accordingly, when the coordinate data, the inspection data, and the like are transmitted to the MES, the roll map described above may be generated by the MES.

As shown in FIGS. 6 and 7, the roll map may be displayed on a display 60.

FIG. 8 illustrates an example of a roll map made by the roll map generating system 200.

FIG. 8 illustrates that a defective portion is inspected by the defect inspector 20 after both a surface of the electrode 1 and a surface opposite thereto are coated with an electrode active material. FIG. 8 also illustrates that the marking machine 30 marks the defective portion after the inspection of the defective portion. A roll map is made after the defective portion is inspected and marked. Actually, a roll map is made after an electrode roll is completed by obtaining all data from the defect inspector 20 and the marking machine 30 and winding of all electrodes are wound around the rewinder RW. An upper part of FIG. 8 is a schematic view of a time sequence for making such a roll map.

A lower part of FIG. 8 shows an example of a roll map.

Defective portions are visually displayed on a region of a coated portion 1a of the roll map of FIG. 8. The displayed defective portions are spot defects but types of defective portions to be marked as described above are not limited thereto.

Marking coordinates of the defective portions are shown at the bottom of the roll map. As described above, the marking coordinates are obtained by the marking machine controller 42 and transmitted to the roll map generating part 50 through the electrode driving controller 41. The roll map generating part 50 may display the marking coordinates while visually displaying the defective portions on a coordinate plane of the roll map.

Meanwhile, black dots marked on a region of an uncoated portion 1b of the roll map of FIG. 8 are provided only for reference, and thus are not actually displayed on the roll map. The black dots are marked on an uncoated portion of a real electrode.

In the present specification, the term "marking coordinate" should be understood to mean a coordinate of a defective portion in a longitudinal direction of an electrode. However, as described above, the defect inspector 20 may also obtain a coordinate of the defective portion in a width direction of the electrode. The coordinate in the width direction coordinate obtained by the defect inspector 20 is also transmitted to the roll map generating part 50 through the controller 40. In the roll map of FIG. 8, coordinates in the width direction are not shown as values on the roll map for simplicity of illustration. However, referring to the roll map of FIG. 8, each spot defect is visually displayed while changing a position thereof in the width direction. This should be understood that the defect inspector 20 identifies positions of defective portions in the width direction and transmits coordinate information thereof to the roll map generating part 50, and the roll map generating part 50 visually displays the defective portions on an area of the roll map corresponding to a coated portion according to the coordinates of the defective portions in the width direction, based on the coordinate information.

### [Embodiments of the Present Invention]

### (Second Embodiment)

### <Electrode Marking Apparatus>

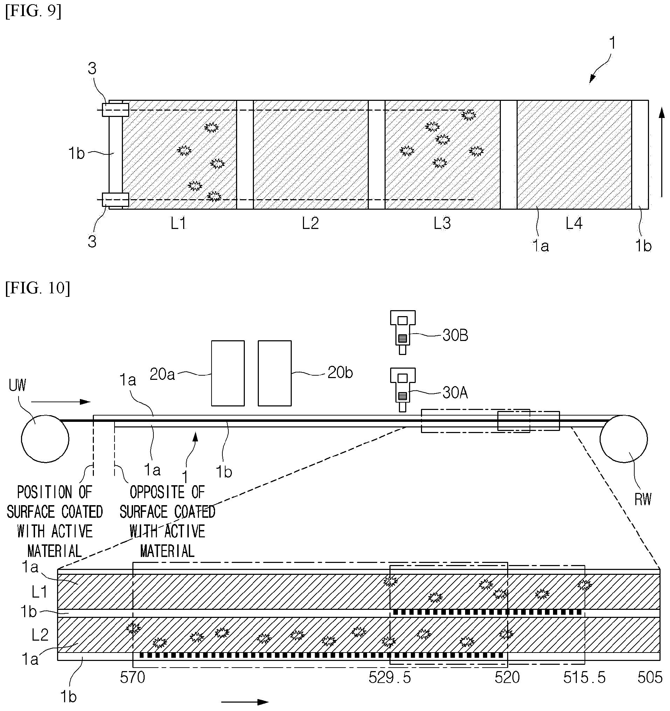

FIG. 9 is a schematic view of a defective section of a multi-lane electrode to which a defect tag is attached.

As shown in FIG. 9, in the related art, in the case of a multi-lane electrode in which a plurality of electrode lanes L1, L2, L3, and L4 are arranged in a width direction of a current collector, defective portions are displayed by attaching a label 3 thereto. This method have the following problems.

First, when a defective section is marked, labels 3 are attached once only to the start of defects and the end of the defects, and thus when the label attached to the start or end of the defects is lost, it is difficult to identify whether the remaining label 3 indicates the start or end of the defects.

Second, as shown in FIG. 9, a defect label is attached to edges of a current collector plate of an electrode, and thus, there is a risk that when defects occur in only certain electrode lanes, e.g., the electrode lanes L1 and L3, the other electrode lanes in which no defects occur may be considered defective.

Third, as shown in FIG. 9, it is difficult to respond to a case in which defect coordinate signals are input almost simultaneously from several defect inspectors 20. For example, a method of marking defects when a starting coordinate '1000 m' of a defect is received from an inspector A and thereafter a starting coordinate '1100 m' of another defect is received from a measuring device B before the generation of an ending coordinate of the defect has yet to be introduced.

An electrode marking apparatus 100 of the second embodiment is based on an assumption that a defective portion is a defective section as shown in FIG. 9.

That is, the defective portion may be a defective section in which defects occur consecutively along an electrode 1. Otherwise, defects that occur intermittently but are close to each other as shown in FIG. 9 may be considered together as a defective section.

A starting coordinate and an ending coordinate of the defective section should be clearly specified. In addition, a method of displaying a defect by attaching labels should be avoided, because it is difficult to identify a starting point or ending point of a defect by the method. When the electrode 1 is a multi-lane electrode, marking should be performed by differentiating between electrode lanes in which defects occur and electrode lanes in which no defects occur. When defects occurring in several electrode lanes overlap each other, the defects should be marked on the electrode lanes while reflecting overlapping portions of the defects.

The above-described problems may be solved by the electrode marking apparatus 100 of the present embodiment.

The basic configuration of the electrode marking apparatus 100 of the present embodiment is as shown in FIG. 3.

Thus, the electrode marking apparatus 100 of the present invention includes a position measuring device 10, a defect inspector 20, a marking machine 30, and a controller 40. The controller 40 may include an electrode driving controller 41 configured to control the movement of an electrode from an unwinder UW to a rewinder RW and connected the position measuring device 10 to obtain information about the amount of winding of the electrode around the rewinder RW, and an marking machine controller 42 configured to determine whether to perform marking by the marking machine 30. A detailed description of parts of the electrode marking apparatus 100 of the present embodiment that are the same as those in the first embodiment is omitted here.

The defect inspector 20 of the present embodiment obtains a starting coordinate and an ending coordinate of the defective section in the longitudinal direction of the electrode. The defect inspector 20 is connected to the position measuring device 10, and thus may identify amounts of winding of the electrode around the rewinder RW when defect sections are detected. That is, the defect inspector 20 may receive information about the amount of winding of the electrode around the rewinder RW at a starting point of the defective section and information about the amount of winding of the electrode around the rewinder RW at an ending point of the defective section through the position measuring device 10 or the controller 40 connected to the position measuring device 10. Similarly, information about a change in the amount of winding of the electrode between the starting and ending points of the defective section may be received through the position measuring device 10 or the controller 40.

Specifically, a spot inspector matches an image captured per frame with the amount of winding of the electrode. A scan inspector matches a start/end signal for each scanning with the amount of winding of the electrode.

In addition, the defect inspector 20 identifies the starting point of the defective section and calculates a starting coordinate of the defective section. In this case, the starting coordinate of the defective section is a value obtained by adding a first offset distance, which is the distance between the defect inspector 20 and the rewinder RW, to the amount of winding of the electrode around the rewinder RW at a point in time when a first defect of the defective section is detected by the defect inspector 20 (i.e., the amount of winding of the electrode matching the first defect of the defective section).

The ending coordinate of the defective section is a value obtained by adding the first offset distance, which is the distance between the defect inspector 20 and the rewinder RW, to the amount of winding of the electrode around the rewinder RW at a point in time when a last defect of the defective section is detected by the defect inspector 20 (i.e., the amount of winding of the electrode matching the last defect of the defective section).

The defect inspector 20 may obtain the starting and ending coordinates of the defective section by receiving information about the amount of winding of the electrode from the controller 40 (e.g., the electrode driving controller 41) and adding the first offset distance, which is the distance between the defect inspector 20 and the rewinder RW, to the amount of winding of the electrode. The obtained starting and ending coordinates of the defective section may be transmitted to the marking machine controller 42 of the controller 40.

The following table shows an example of calculating the coordinates of a defective section by arranging a spot inspector 20a and a scan inspector 20b on two electrode lanes.

**[Table 1]**

| Frame Number | Amount of winding of electrode (m) | Defect judgment | Electrode lot count | Defective electrode lane |
|---|---|---|---|---|
| 1 | 500.0m | normal | 0 | - |
| 2 | 500.5m | defective | 0 | 1 |
| 3 | 501.0m | defective | 0 | 1 |
| 4 | 501.5m | defective | 0 | 1 |
| 5 | 502.0m | defective | 0 | 1 |
| 6 | 502.5m | defective | 0 | 1 |
| 7 | 503.0m | defective | 0 | 1 |
| 8 | 503.5m | defective | 0 | 1 |
| ... | ... | ... | ... | ... |
| 30 | 514.5m | defective | 0 | 1 |
| 31 | 515.0m | normal | 0 | - |
| 32 | 515.5m | normal | 0 | - |

### <Spot Inspector 20a, First Offset Distance of 15m>

It can be seen from Table 1 above that a starting coordinate of a defect on a second electrode lane L1 inspected by the spot inspector 20a is 515.5 m calculated by adding 15 m, which is a first offset distance, to 500.5 m, which is the amount of winding of an electrode at a starting point of the defect. An ending coordinate of the defect on the second electrode lane is 529.5 m calculated by adding the first offset distance to 514.5 m, which is the amount of winding of the electrode at an ending point of the defect.

**[Table 2]**

| Scan Number | Amount of winding of electrode at the start of scanning | Amount of winding of electrode at the end of scanning | Defect judgment | Electrode lot count |
|---|---|---|---|---|
| 1 | 500.0m | 510.0m | normal | 0 |
| 2 | 510.0m | 520.0m | defective | 0 |
| 3 | 520.0m | 530.0m | defective | 0 |
| 4 | 530.0m | 540.0m | defective | 0 |
| 5 | 540.0m | 550.0m | defective | 0 |
| 6 | 550.0m | 560.0m | defective | 0 |
| 7 | 560.0m | 570.0m | normal | 0 |

### <Scan Inspector 20b, First Offset Distance of 10 m>

It can be seen from Table 2 above that a starting coordinate of a defect on the second electrode lane inspected by the scan inspector 20b is 520 m calculated by adding 10 m, which is a first offset distance, to 510 m, which is the amount of winding of the electrode at a starting point of the defect. An ending coordinate of the defect on the second electrode lane is 570 m calculated by adding the first offset distance to 560 m, which is the amount of winding of the electrode at an ending point of the defect.

In Tables 1 and 2 above, the electrode lot count indicates a lot number. For example, a lot number of an electrode first moved between the unwinder UW and the rewinder RW may be set to 0 and a lot number of an electrode moved next between the unwinder UW and the rewinder RW may be set to 1. Information about the lot numbers may also be stored in the controller 40 or the roll map generating part 50.

The controller 40 determines whether to start or end marking by comparing a real-time relative position value of the marking machine 30 relative to the moved electrode 1 with the starting coordinate and the ending coordinate of the defective section.

The real-time relative position value of the marking machine 30 is a value obtained by adding a second offset distance (e.g., 10 m), which is the distance between the marking machine 30 and the rewinder RW, to the amount of winding of the electrode 1 in real time at a point in time when the electrode 1 passes through the marking machine 30.

Specifically, the controller 40 outputs a defect marking signal to the marking machine 30 at the moment when the real-time relative position value becomes greater than the starting coordinate of the defective section. The defect marking signal is a signal instructing to start marking. The marking machine controller 42 obtains as a marking starting coordinate a real-time relative position value of the marking machine 30 at a point time when the defect marking signal is output.

In addition, the marking machine controller 42 may stop the outputting of the defect marking signal to the marking machine 30 at the moment when the real-time relative position value of the marking machine 30 becomes greater than the ending coordinate of the defective section. The stopping of the outputting of the defect marking signal may be a signal instructing to end marking. The marking machine controller 42 obtains as a marking ending coordinate a real-time relative position value of the marking machine 30 at a point time when the outputting of the defect marking signal is stopped.

The marking machine 30 makes marks on the electrode along the defective section according to the signal (the defect marking signal) instructing to start marking and the signal (the stopping of the outputting of the defect marking signal) instructing to end marking, which are received from the marking machine controller 42. Specifically, the marking machine 30 makes marks on an uncoated portion 1b between coated portions of the electrode 1 that is a multi-lane electrode.

As described above, the electrode marking apparatus 100 of the present embodiment is capable of reliably marking the starting and ending coordinates of the defective section on the electrode using a marking machine, e.g., an ink marking machine. Therefore, the coordinates of a defect may be prevented from being lost due to the separation of a label unlike in the related art.

In addition, a marking starting coordinate and a marking ending coordinate are obtained by comparing a real-time relative position value of the marking machine 30, which is a function of the amount of winding of the electrode, with the starting coordinate and ending coordinate of the defective section regardless of the speed of movement of the electrode. Therefore, the position of the defective section may be stably identified regardless of the speed of movement of the electrode.

Meanwhile, the electrode marking apparatus 100 of the present invention may be applied to mark a defective section of an electrode with one electrode lane. In addition, the electrode marking apparatus 100 of the present invention may also be applied to mark a defective section of an electrode with a plurality of electrode lanes in the width direction of the electrode. In this case, one marking machine 30 is disposed for each of the electrode lanes. Each marking machine 30 may consecutively perform marking along a defective section of each of the electrode lanes according to a signal instructing to start and end marking, which is received from the controller. In this case, each defect inspector 20 and each marking machine 30 are independently controlled by the controller 40, and particularly, the marking machine controller 42. Therefore, when a defective section occurs only in a specific electrode lane among the plurality of electrode lanes, marking may be performed by the marking machine 30 corresponding to the specific electrode lane. In this case, marking is not performed on the other electrode lanes in which no defects occur.

When defect coordinate signals are input almost simultaneously from several defect inspectors 20, marking is performed by the marking machine 30 corresponding to each of the electrode lanes, and thus may be performed on overlapping portions of defective sections.

Referring to Tables 1 and 2 above, a defect marking process when defective sections of an electrode lane overlap each other will be described below.

First, a starting coordinate '515.5 m' of a defective section with respect to a first electrode lane L1 is received from the spot inspector 20a. The marking machine controller 42 monitors a real-time relative position value of a marking machine (a first marking machine 30A) that makes marks on the first electrode lane, and outputs a defect marking signal to the first marking machine 30A at the moment when the real-time relative position value exceeds 515.5 m. The first marking machine 30A makes marks on an uncoated portion 1b of the first electrode lane L1 according to the defect marking signal. Because coordinates of the defective section are continuously received from the spot inspector 20a as shown in Table 1, the first marking machine 30A continuously makes marks on the defective section.

Meanwhile, a starting coordinate '520 m' of a defective section with respect to the second electrode lane is received from the scan inspector 20b while marking is performed by the first marking machine 30A. The marking machine controller 42 monitors a real-time relative position value of a marking machine (a second marking machine 30B) that makes marks on the second electrode lane L2, and outputs a defect marking signal to the second marking machine 30B at the moment when the real-time relative position value exceeds 520 m. The second marking machine 30B makes marks on an uncoated portion 1b of the second electrode lane L2 according to the defect marking signal. Because coordinates of the defective section are continuously received from the scan inspector 20b as shown in Table 2, the second marking machine 30B continuously makes marks.

When an ending coordinate '529.5 m' of the defective section is received from the spot inspector 20a, and the marking machine controller 42 stops the outputting of the defect marking signal to the first marking machine 30A when the real-time relative position value of the first marking machine 30A is greater than 529.5 m.

In addition, when an ending coordinate '570 m' of the defective section is received from the scan inspector 20b, and the marking machine controller 42 stops the outputting of the defect marking signal to the second marking machine 30B when the real-time relative position value of the second marking machine 30B is greater than 570 m.

As described above, only the first marking machine 30A makes marks on the first electrode L1 in a section in which coordinates of the electrode are in a range of 515.5 to 520 m.

Defective sections on the first electrode lane L1 and the second electrode lane L2 overlap each other in a section in which coordinates of the electrode are in a range of 520 m to 529.5 m. In this case, the first marking machine 30A and the second marking machine 30B make marks on the uncoated portion 1b of the first electrode lane L1 and the uncoated portion 1b of the second electrode lane L2, respectively.

Only the second marking machine 30B makes marks on the second electrode lane L2 in a section in which coordinates of the electrode are in a range of 529.5 to 570 m.

As described above, the electrode marking apparatus 100 of the present embodiment is capable of effectively making marks on defective sections of a multi-lane electrode even when the defective sections overlap each other.

FIG. 10 particularly illustrates that defective sections are marked by first and second marking machines as described above.

### <Roll map generating System>

FIG. 10 is a schematic view of a roll map made by the electrode marking apparatus 100 according to a second embodiment which is not part of the claimed invention.

The roll map generating system 200 may display the above-described defective section on a roll map, based on the marking starting coordinate and the marking ending coordinate.

The roll map generating system 200 of the present embodiment includes: a position measuring device 10 configured to obtain information about a position of the electrode 1 according to the amount of rotation of a rewinder RW or an unwinder UW in the form of a coordinate in a longitudinal direction of the electrode 1 when the electrode 1 is moved between the unwinder UW and the rewinder RW; at least one defect inspector 20 configured to inspect the electrode 1 to specify a defective section, and connected to the position measuring device 10 to obtain a starting coordinate and an ending coordinate of the defective section in the longitudinal direction of the electrode 1; a marking machine 30 installed behind the at least one defect inspector 20 in a direction of movement of the electrode 1, and configured to make marks on the electrode 1 along the defective section according to a signal instructing to start and end marking and received from a controller 40; the controller 40 configured to output a defect marking signal to the marking machine 30 at the moment when a real-time relative position value of the marking machine 30 relative to the moved electrode 1 becomes greater than the starting coordinate of the defective section, stop the outputting of the defect marking signal to the marking machine 30 at the moment when the real-time relative position value becomes greater than the ending coordinate of the defective section, and respectively obtain, as a marking starting coordinate and a marking ending coordinate, the real-time relative position value of the marking machine 30 when the defect marking signal is output and the real-time relative position value of the marking machine 30 when the outputting of the defect marking signal is stopped; and a roll map generating part 50 configured to generate a roll map defined as a coordinate plane with two axes of coordinates, i.e., an axis in the longitudinal direction of the electrode 1 and an axis in a width direction of the electrode 1, in which the position of the moved electrode 1 is displayed with coordinates on the coordinate plane. The roll map generating part 50 may display the defective section on the roll map, based on the marking starting coordinate and the marking ending coordinate received from the controller 40.

The position measuring device 10, the defect inspector 20, the marking machine 30, the controller 40, and the roll map generating part 50 are as described above, and thus a redundant description thereof is omitted here.

FIG. 10 illustrates a roll map on which the two electrode lanes L1 and L2 are displayed.

The roll map is a coordinate plane on which a defective section is displayed, the defective section being marked on an actual electrode by obtaining coordinates of the defective section by a defect inspector with a spot inspector and a scan inspector as in the above-described second embodiment and comparing the coordinates with real-time relative position values of first and second marking machines.

Defects are visually displayed on a region of the roll map on which a coated portion of each electrode lane is displayed.

Marking coordinates are displayed below each of the defects. Specifically, a marking starting coordinate and a marking ending coordinate are displayed to indicate defective sections of a first electrode lane L1 and a second electrode lane L2. In addition, overlapping portions of the defective sections of the first electrode lane L1 and the second electrode lane L2 may be easily identified from the defects.

For reference, black dot marks are consecutively displayed along the defective sections in an area of the roll map corresponding to an uncoated portion 1b. As described above, the marks are placed on an uncoated portion of an actual electrode and are not necessarily displayed on the roll map.

The present invention has been described above in more detail with reference to the drawings, the embodiments, etc. However, the configurations illustrated in the drawings or embodiments described in the present specification are only examples.

### (Reference Numerals)

1: electrode
1a: coated portion
1b: uncoated portion
3: label
10: position measuring device
20: defect inspector
20a: spot inspector
20A: inspector A
20B: scan inspector
20B: measuring device B
30: marking machine
30A: first marking machine
30B: second marking machine
40: controller
41: electrode driving controller
42: marking machine controller
50: roll map generating part
51: database
52: central processing unit
53: visualizing device
60: display
10: electrode marking apparatus
200: roll map generating system

## Claims

1. An electrode marking apparatus (100) for an electrode (1), comprising:
an unwinder (UW) and a rewinder (RW) configured to move the electrode therebetween in a movement direction;
a position measuring device (10) configured to obtain information about a position of the electrode (1) according to an amount of rotation of the unwinder (UW) or the rewinder (RW) in form of a coordinate in a longitudinal direction of the electrode (1);
at least one defect inspector (20) configured to inspect the electrode (1) to specify a defective portion, and connected to the position measuring device (10) to obtain a coordinate of the defective portion in the longitudinal direction of the electrode (1);
a marking machine (30) installed behind the at least one defect inspector (20) in the movement direction of the electrode (1); and
a controller (40) configured to determine whether to perform marking by comparing a real-time relative position value of the marking machine (30) relative to the moved electrode (1) with the coordinate of the defective portion,
wherein the marking machine (30) is configured to make a mark on the defective portion of the electrode (1) according to a defect marking signal from the controller (40).

2. The electrode marking apparatus (100) of claim 1, wherein the coordinate of the defective portion is a sum of a first offset distance and an amount of winding of the electrode (1) around the rewinder (RW) at a point in time when the defective portion is detected by the defect inspector (20), the first offset distance being a distance between the defect inspector (20) and the rewinder (RW).

3. The electrode marking apparatus (100) of claim 1 or 2, wherein the defect inspector (20) is configured to obtain information about a position of the defective portion in a width direction of the electrode (1) in a form of a coordinate in the width direction.

4. The electrode marking apparatus (100) of any one of claims 1 to 3, wherein the real-time relative position value of the marking machine (30) is a sum of a second offset distance and an amount of winding of the electrode (1) in real time at a point in time when the electrode (1) passes through the marking machine (30), the second offset distance being a distance between the marking machine (30) and the rewinder (RW), and
the controller (40) is configured to output the defect marking signal to the marking machine (30) at a point in time when the real-time relative position value becomes greater than the coordinate of the defective portion.

5. The electrode marking apparatus (100) of claim 4, wherein the controller (40) comprises:
an electrode driving controller (41) configured to control movement of the electrode (1) from the unwinder (UW) to the rewinder (RW), and connected to the position measuring device (10) to obtain information about an amount of winding of the electrode (1) around the rewinder (RW); and
a marking machine controller (42) configured to determine whether to perform marking by the marking machine (30),
wherein the marking machine controller (42) is configured to calculate the real-time relative position value of the marking machine (30) by adding the second offset distance to the information about the amount of winding of the electrode (1) received from the electrode driving controller (41), and to output the defect marking signal to the marking machine (30) at a moment when the calculated real-time relative position value becomes the coordinate of the defective portion.

6. The electrode marking apparatus (100) of claim 5, wherein the defect inspector (20) is configured to obtain the coordinate of the defective portion by adding a first offset distance to the information about the amount of winding of the electrode (1) received from the electrode driving controller (41), and transmit the obtained coordinate of the defective portion to the marking machine controller (42), wherein the first offset distance is a distance between the defect inspector (20) and the rewinder (RW).

7. The electrode marking apparatus (100) of any one of claims 1 to 6, wherein the defective portion comprises a defective section in which defects have occurred consecutively or intermittently,
wherein the defect inspector (20) is configured to obtain a starting coordinate and an ending coordinate of the defective section in the longitudinal direction of the electrode (1),
the controller (40) is configured to determine whether to start or end marking by comparing the real-time relative position value of the marking machine (30) relative to the moved electrode (1) with the starting coordinate and the ending coordinate of the defective section, and
the marking machine (30) is configured to make marks on the electrode (1) along the defective section according to a signal instructing to start or end marking, the signal being received from the controller (40).

8. The electrode marking apparatus (100) of claim 7, wherein the starting coordinate of the defective section is a sum a first offset distance and an amount of winding of the electrode (1) around the rewinder (RW) at a point in time when a first defect in the defect section is detected by the defect inspector (20), the first offset distance being a distance between the defect inspector (20) and the rewinder (RW), and
the ending coordinate of the defective section is a sum of the first offset distance and an amount of winding of the electrode (1) around the rewinder (RW) at a point in time when a last defect in the defective section is detected by the defect inspector (20).

9. The electrode marking apparatus (100) of claim 7 or 8, wherein the real-time relative position value of the marking machine (30) is a sum of a second offset distance and an amount of winding of the electrode (1) in real time at a point in time when the electrode (1) passes through the marking machine (30), the second offset distance being a distance between the marking machine (30) and the rewinder (RW), and
the controller (40) configured to output the defect marking signal to the marking machine (30) at a moment when the real-time relative position value becomes greater than the starting coordinate of the defective section, and stop the output of the defect marking signal to the marking machine (30) at a point in time when the real-time relative position value becomes greater than the ending coordinate of the defective section.

10. The electrode marking apparatus (100) of claim 9, wherein the controller (40) comprises:
an electrode driving controller (41) configured to control movement of the electrode (1) from the unwinder (UW) to the rewinder (RW), and connected to the position measuring device (10) to obtain information about an amount of winding of the electrode (1) around the rewinder (RW); and
a marking machine controller (42) configured to determine whether to perform marking by the marking machine (30),
wherein the marking machine controller (42) is configured to calculate the real-time relative position value of the marking machine (30) by adding the second offset distance to the information about the amount of winding of the electrode (1) received from the electrode driving controller (41), and
the marking machine controller (42) is configured to output the defect marking signal to the marking machine (30) at a moment when the calculated real-time relative position value becomes greater than the starting coordinate of the defective section, and stop the output of the defect marking signal to the marking machine (30) at a moment when the calculated real-time relative position value becomes greater than the ending coordinate of the defective section.

11. The electrode marking apparatus (100) of claim 10, wherein the defect inspector (20) is configured to obtain the starting coordinate and the ending coordinate of the defective section by adding a first offset distance to the information about the amount of winding of the electrode (1) received from the electrode driving controller (41), and transmit the obtained starting and ending coordinates of the defective section to the marking machine controller (42), the first offset distance being a distance between the defect inspector (20) and the rewinder (RW).

12. The electrode marking apparatus (100) of any one of claims 7 to 11, wherein the electrode (1) comprises a plurality of electrode lanes in a width direction,
wherein one of marking machines (30) is provided for each of the plurality of electrode lanes, and
each of the marking machines (30) continuously make marks along a defective section of each of the plurality of electrode lanes according to a signal instructing to start and end marking, the signal being received from the controller (40).

## Patentansprüche

1. Elektrodenmarkierungsvorrichtung (100) für eine Elektrode (1), umfassend:
einen Abwickler (UW) und einen Aufwickler (RW), die dazu eingerichtet sind, die Elektrode zwischen sich in einer Bewegungsrichtung zu bewegen;
eine Positionsmessvorrichtung (10), die dazu eingerichtet ist, Informationen über eine Position der Elektrode (1) entsprechend einem Drehbetrag des Abwicklers (UW) oder des Aufwicklers (RW) in Form einer Koordinate in einer Längsrichtung der Elektrode (1) zu erhalten;
zumindest eine Fehlerprüfeinrichtung (20), die dazu eingerichtet ist, die Elektrode (1) zu prüfen, um einen fehlerhaften Bereich zu bestimmen, und die mit der Positionsmessvorrichtung (10) verbunden ist, um eine Koordinate des fehlerhaften Bereichs in der Längsrichtung der Elektrode (1) zu erhalten;
eine Markierungsmaschine (30), die in der Bewegungsrichtung der Elektrode (1) hinter der zumindest einen Fehlerprüfeinrichtung (20) installiert ist; und
eine Steuerung (40), die dazu eingerichtet ist, durch Vergleichen eines Echtzeit-Relativpositionswerts der Markierungsmaschine (30) relativ zu der bewegten Elektrode (1) mit der Koordinate des fehlerhaften Bereichs zu bestimmen, ob ein Markieren durchzuführen ist,
wobei die Markierungsmaschine (30) dazu eingerichtet ist, gemäß einem Fehlermarkierungssignal von der Steuerung (40) eine Markierung auf dem fehlerhaften Bereich der Elektrode (1) anzubringen.

2. Elektrodenmarkierungsvorrichtung (100) nach Anspruch 1, wobei die Koordinate des fehlerhaften Bereichs eine Summe aus einem ersten Versatzabstand und einer Aufwickelmenge der Elektrode (1) um den Aufwickler (RW) zu einem Zeitpunkt ist, zu dem der fehlerhafte Bereich durch die Fehlerprüfeinrichtung (20) erkannt wird, wobei der erste Versatzabstand ein Abstand zwischen der Fehlerprüfeinrichtung (20) und dem Aufwickler (RW) ist.

3. Elektrodenmarkierungsvorrichtung (100) nach Anspruch 1 oder 2, wobei die Fehlerprüfeinrichtung (20) dazu eingerichtet ist, Informationen über eine Position des fehlerhaften Bereichs in einer Breitenrichtung der Elektrode (1) in Form einer Koordinate in der Breitenrichtung zu erhalten.

4. Elektrodenmarkierungsvorrichtung (100) nach einem der Ansprüche 1 bis 3, wobei der Echtzeit-Relativpositionswert der Markierungsmaschine (30) eine Summe aus einem zweiten Versatzabstand und einer Aufwickelmenge der Elektrode (1) in Echtzeit zu einem Zeitpunkt ist, zu dem die Elektrode (1) die Markierungsmaschine (30) durchläuft, wobei der zweite Versatzabstand ein Abstand zwischen der Markierungsmaschine (30) und dem Aufwickler (RW) ist, und
die Steuerung (40) dazu eingerichtet ist, das Fehlermarkierungssignal zu einem Zeitpunkt an die Markierungsmaschine (30) auszugeben, zu dem der Echtzeit-Relativpositionswert größer als die Koordinate des fehlerhaften Bereichs wird.

5. Elektrodenmarkierungsvorrichtung (100) nach Anspruch 4, wobei die Steuerung (40) umfasst:
eine Elektrodenantriebssteuerung (41), die dazu eingerichtet ist, die Bewegung der Elektrode (1) von dem Abwickler (UW) zu dem Aufwickler (RW) zu steuern, und die mit der Positionsmessvorrichtung (10) verbunden ist, um Informationen über eine Aufwickelmenge der Elektrode (1) um den Aufwickler (RW) zu erhalten, und
eine Markierungsmaschinensteuerung (42), die dazu eingerichtet ist, zu bestimmen, ob ein Markieren durch die Markierungsmaschine (30) durchzuführen ist,
wobei die Markierungsmaschinensteuerung (42) dazu eingerichtet ist, den Echtzeit-Relativpositionswert der Markierungsmaschine (30) durch Addieren des zweiten Versatzabstands zu den von der Elektrodenantriebssteuerung (41) empfangenen Informationen über die Aufwickelmenge der Elektrode (1) zu berechnen und das Fehlermarkierungssignal in einem Moment an die Markierungsmaschine (30) auszugeben, in dem der berechnete Echtzeit-Relativpositionswert gleich der Koordinate des fehlerhaften Bereichs wird.

6. Elektrodenmarkierungsvorrichtung (100) nach Anspruch 5, wobei die Fehlerprüfeinrichtung (20) dazu eingerichtet ist, die Koordinate des fehlerhaften Bereichs durch Addieren eines ersten Versatzabstands zu den von der Elektrodenantriebssteuerung (41) empfangenen Informationen über die Aufwickelmenge der Elektrode (1) zu erhalten und die erhaltene Koordinate des fehlerhaften Bereichs an die Markierungsmaschinensteuerung (42) zu übertragen, wobei der erste Versatzabstand ein Abstand zwischen der Fehlerprüfeinrichtung (20) und dem Aufwickler (RW) ist.

7. Elektrodenmarkierungsvorrichtung (100) nach einem der Ansprüche 1 bis 6, wobei der fehlerhafte Bereich einen fehlerhaften Abschnitt umfasst, in dem Fehler aufeinanderfolgend oder intermittierend aufgetreten sind,
wobei die Fehlerprüfeinrichtung (20) dazu eingerichtet ist, eine Anfangskoordinate und eine Endkoordinate des fehlerhaften Abschnitts in der Längsrichtung der Elektrode (1) zu erhalten,
die Steuerung (40) dazu eingerichtet ist, durch Vergleichen des Echtzeit-Relativpositionswerts der Markierungsmaschine (30) relativ zu der bewegten Elektrode (1) mit der Anfangskoordinate und der Endkoordinate des fehlerhaften Abschnitts zu bestimmen, ob das Markieren zu beginnen oder zu beenden ist, und
die Markierungsmaschine (30) dazu eingerichtet ist, gemäß einem Signal, das dazu anweist, das Markieren zu beginnen oder zu beenden, Markierungen auf der Elektrode (1) entlang des fehlerhaften Abschnitts anzubringen, wobei das Signal von der Steuerung (40) empfangen wird.

8. Elektrodenmarkierungsvorrichtung (100) nach Anspruch 7, wobei die Anfangskoordinate des fehlerhaften Abschnitts eine Summe aus einem ersten Versatzabstand und einer Aufwickelmenge der Elektrode (1) um den Aufwickler (RW) zu einem Zeitpunkt ist, zu dem ein erster Fehler in dem fehlerhaften Abschnitt durch die Fehlerprüfeinrichtung (20) erkannt wird, wobei der erste Versatzabstand ein Abstand zwischen der Fehlerprüfeinrichtung (20) und dem Aufwickler (RW) ist, und
die Endkoordinate des fehlerhaften Abschnitts eine Summe aus dem ersten Versatzabstand und einer Aufwickelmenge der Elektrode (1) um den Aufwickler (RW) zu einem Zeitpunkt ist, zu dem ein letzter Fehler in dem fehlerhaften Abschnitt durch die Fehlerprüfeinrichtung (20) erkannt wird.

9. Elektrodenmarkierungsvorrichtung (100) nach Anspruch 7 oder 8, wobei der Echtzeit-Relativpositionswert der Markierungsmaschine (30) eine Summe aus einem zweiten Versatzabstand und einer Aufwickelmenge der Elektrode (1) in Echtzeit zu einem Zeitpunkt ist, zu dem die Elektrode (1) die Markierungsmaschine (30) durchläuft, wobei der zweite Versatzabstand ein Abstand zwischen der Markierungsmaschine (30) und dem Aufwickler (RW) ist, und
die Steuerung (40) dazu eingerichtet ist, das Fehlermarkierungssignal in einem Moment an die Markierungsmaschine (30) auszugeben, in dem der Echtzeit-Relativpositionswert größer als die Anfangskoordinate des fehlerhaften Abschnitts wird, und die Ausgabe des Fehlermarkierungssignals an die Markierungsmaschine (30) zu einem Zeitpunkt zu stoppen, zu dem der Echtzeit-Relativpositionswert größer als die Endkoordinate des fehlerhaften Abschnitts wird.

10. Elektrodenmarkierungsvorrichtung (100) nach Anspruch 9, wobei die Steuerung (40) umfasst:
eine Elektrodenantriebssteuerung (41), die dazu eingerichtet ist, die Bewegung der Elektrode (1) von dem Abwickler (UW) zu dem Aufwickler (RW) zu steuern, und die mit der Positionsmessvorrichtung (10) verbunden ist, um Informationen über eine Aufwickelmenge der Elektrode (1) um den Aufwickler (RW) zu erhalten; und
eine Markierungsmaschinensteuerung (42), die dazu eingerichtet ist, zu bestimmen, ob ein Markieren durch die Markierungsmaschine (30) durchzuführen ist,
wobei die Markierungsmaschinensteuerung (42) dazu eingerichtet ist, den Echtzeit-Relativpositionswert der Markierungsmaschine (30) durch Addieren des zweiten Versatzabstands zu den von der Elektrodenantriebssteuerung (41) empfangenen Informationen über die Aufwickelmenge der Elektrode (1) zu berechnen, und
die Markierungsmaschinensteuerung (42) dazu eingerichtet ist, das Fehlermarkierungssignal in einem Moment an die Markierungsmaschine (30) auszugeben, in dem der berechnete Echtzeit-Relativpositionswert größer als die Anfangskoordinate des fehlerhaften Abschnitts wird, und die Ausgabe des Fehlermarkierungssignals an die Markierungsmaschine (30) in einem Moment zu stoppen, in dem der berechnete Echtzeit-Relativpositionswert größer als die Endkoordinate des fehlerhaften Abschnitts wird.

11. Elektrodenmarkierungsvorrichtung (100) nach Anspruch 10, wobei die Fehlerprüfeinrichtung (20) dazu eingerichtet ist, die Anfangskoordinate und die Endkoordinate des fehlerhaften Abschnitts durch Addieren eines ersten Versatzabstands zu den von der Elektrodenantriebssteuerung (41) empfangenen Informationen über die Aufwickelmenge der Elektrode (1) zu erhalten und die erhaltenen Anfangs- und Endkoordinaten des fehlerhaften Abschnitts an die Markierungsmaschinensteuerung (42) zu übertragen, wobei der erste Versatzabstand ein Abstand zwischen der Fehlerprüfeinrichtung (20) und dem Aufwickler (RW) ist.

12. Elektrodenmarkierungsvorrichtung (100) nach einem der Ansprüche 7 bis 11, wobei die Elektrode (1) eine Vielzahl von Elektrodenspuren in einer Breitenrichtung umfasst,
wobei für jede der Vielzahl von Elektrodenspuren eine der Markierungsmaschinen (30) vorgesehen ist, und
jede der Markierungsmaschinen (30) kontinuierlich Markierungen entlang eines fehlerhaften Abschnitts jeder der Vielzahl von Elektrodenspuren gemäß einem Signal anbringt, das dazu anweist, das Markieren zu beginnen und zu beenden, wobei das Signal von der Steuerung (40) empfangen wird.

## Revendications

1. Dispositif de marquage d'électrode (100) pour une électrode (1), comprenant :
un dérouleur (UW) et un enrouleur (RW) prévus pour déplacer l'électrode entre eux dans une direction de déplacement ;
un dispositif de mesure de position (10) prévu pour obtenir des informations relatives à un emplacement de l'électrode (1) en fonction d'une valeur de rotation du dérouleur (UW) ou de l'enrouleur (RW) sous forme d'une coordonnée dans le sens de la longueur de l'électrode (l) ;
au moins un inspecteur de défauts (20) prévu pour inspecter l'électrode (1) afin de spécifier une partie défectueuse, et connecté au dispositif de mesure de position (10) afin d'obtenir une coordonnée de la partie défectueuse dans le sens de la longueur de l'électrode (1) ;
une machine de marquage (30) installée derrière ledit au moins un inspecteur de défauts (20) dans la direction de déplacement de l'électrode (1) ; et
un dispositif de commande (40) prévu pour déterminer s'il convient d'effectuer un marquage par comparaison d'une valeur de position relative en temps réel de la machine de marquage (30) par rapport à l'électrode déplacée (1) avec la coordonnée de la partie défectueuse,
où la machine de marquage (30) est prévue pour faire une marque sur la partie défectueuse de l'électrode (1) en fonction d'un signal de marquage de défaut provenant du contrôleur (40).

2. Dispositif de marquage d'électrode (100) selon la revendication 1, où la coordonnée de la partie défectueuse est une somme d'une première distance de décalage et d'une valeur d'enroulement de l'électrode (1) autour de l'enrouleur (RW) à un moment où la partie défectueuse est détectée par l'inspecteur de défauts (20), la première distance de décalage étant une distance entre l'inspecteur de défauts (20) et le rembobineur (RW).

3. Dispositif de marquage d'électrode (100) selon la revendication 1 ou la revendication 2, où l'inspecteur de défauts (20) est prévu pour obtenir des informations relatives à un emplacement de la partie défectueuse dans le sens de la largeur de l'électrode (1) sous forme de coordonnée dans le sens de la largeur.

4. Dispositif de marquage d'électrode (100) selon l'une des revendications 1 à 3, où la valeur de position relative en temps réel de la machine de marquage (30) est une somme d'une deuxième distance de décalage et d'une valeur d'enroulement de l'électrode (1) en temps réel à un moment où l'électrode (1) passe par la machine de marquage (30), la deuxième distance de décalage étant une distance entre la machine de marquage (30) et l'enrouleur (RW), et
où le contrôleur (40) est prévu pour délivrer le signal de marquage de défaut à la machine de marquage (30) à un moment où la valeur de position relative en temps réel devient supérieure à la coordonnée de la partie défectueuse.

5. Dispositif de marquage d'électrode (100) selon la revendication 4, où le contrôleur (40) comprend :
un contrôleur d'entraînement d'électrode (41) prévu pour commander le déplacement de l'électrode (1) du dérouleur (UW) à l'enrouleur (RW), et connecté au dispositif de mesure de position (10) pour obtenir des informations relatives à une valeur d'enroulement de l'électrode (1) autour de l'enrouleur (RW) ; et
un contrôleur de machine de marquage (42) prévu pour déterminer s'il convient d'effectuer un marquage par la machine de marquage (30),
où le contrôleur de machine de marquage (42) est prévu pour calculer la valeur de position relative en temps réel de la machine de marquage (30) par addition de la deuxième distance de décalage aux informations relatives à la valeur d'enroulement de l'électrode (1) reçues du contrôleur d'entraînement d'électrode (41), et pour délivrer le signal de marquage de défaut à la machine de marquage (30) à un moment où la valeur de position relative en temps réel calculée devient égale à la coordonnée de la partie défectueuse.

6. Dispositif de marquage d'électrode (100) selon la revendication 5, où l'inspecteur de défauts (20) est prévu pour obtenir la coordonnée de la partie défectueuse par ajout d'une première distance de décalage aux informations relatives à la valeur d'enroulement de l'électrode (1) reçues du contrôleur de commande d'électrode (41), et transmettre la coordonnée obtenue de la partie défectueuse au contrôleur de machine de marquage (42), la première distance de décalage étant une distance entre l'inspecteur de défauts (20) et l'enrouleur (RW).

7. Dispositif de marquage d'électrode (100) selon l'une des revendications 1 à 6, où la partie défectueuse comprend une section défectueuse dans laquelle des défauts sont apparus successivement ou de manière intermittente,
où l'inspecteur de défauts (20) est prévu pour obtenir une coordonnée initiale et une coordonnée finale de la section défectueuse dans le sens de la longueur de l'électrode (1),
le contrôleur (40) est prévu pour déterminer s'il convient de commencer ou de terminer le marquage par comparaison de la valeur de position relative en temps réel de la machine de marquage (30) relative à l'électrode déplacée (1) avec les coordonnées initiales et finale de la section défectueuse, et
la machine de marquage (30) est prévue pour faire des marques sur l'électrode (1) le long de la section défectueuse en fonction d'un signal commandant le commencement ou la fin du marquage, ledit signal étant reçu du contrôleur (40).

8. Dispositif de marquage d'électrode (100) selon la revendication 7, où la coordonnée initiale de la section défectueuse est une somme d'une première distance de décalage et d'une valeur d'enroulement de l'électrode (1) autour de l'enrouleur (RW) à un moment où un premier défaut dans la section de défaut est détecté par l'inspecteur de défauts (20), la première distance de décalage étant une distance entre l'inspecteur de défauts (20) et l'enrouleur (RW), et
la coordonnée finale de la section défectueuse est une somme de la première distance de décalage et d'une valeur d'enroulement de l'électrode (1) autour de l'enrouleur (RW) à un moment où un dernier défaut dans la section défectueuse est détecté par l'inspecteur de défauts (20).

9. Dispositif de marquage d'électrode (100) selon la revendication 7 ou la revendication 8, où la valeur de position relative en temps réel de la machine de marquage (30) est une somme d'une deuxième distance de décalage et d'une valeur d'enroulement de l'électrode (1) en temps réel à un moment où l'électrode (1) passe par la machine de marquage (30), la deuxième distance de décalage étant une distance entre la machine de marquage (30) et l'enrouleur (RW), et
le contrôleur (40) est prévu pour délivrer le signal de marquage de défaut à la machine de marquage (30) à un moment où la valeur de position relative en temps réel devient supérieure à la coordonnée initiale de la section défectueuse, et arrêter la délivrance du signal de marquage de défaut à la machine de marquage (30) à un moment où la valeur de position relative en temps réel devient supérieure à la coordonnée finale de la section défectueuse.

10. Dispositif de marquage d'électrode (100) selon la revendication 9, où le contrôleur (40) comprend :
un contrôleur d'entraînement d'électrode (41) prévu pour commander le déplacement de l'électrode (1) du dérouleur (UW) à l'enrouleur (RW), et connecté au dispositif de mesure de position (10) pour obtenir des informations relatives à une valeur d'enroulement de l'électrode (1) autour de l'enrouleur (RW) ; et
un contrôleur de machine de marquage (42) prévu pour déterminer s'il convient d'effectuer un marquage par la machine de marquage (30),
où le contrôleur de machine de marquage (42) est prévu pour calculer la valeur de position relative en temps réel de la machine de marquage (30) par ajout de la deuxième distance de décalage aux informations relatives à la valeur d'enroulement de l'électrode (1) reçues du contrôleur d'entraînement d'électrode (41), et
le contrôleur de machine de marquage (42) est prévu pour délivrer le signal de marquage de défaut à la machine de marquage (30) à un moment où la valeur de position relative en temps réel calculée devient supérieure à la coordonnée initiale de la section défectueuse, et arrêter la délivrance du signal de marquage de défaut à la machine de marquage (30) à un moment où la valeur de position relative en temps réel calculée devient supérieure à la coordonnée finale de la section défectueuse.

11. Dispositif de marquage d'électrode (100) selon la revendication 10, où l'inspecteur de défauts (20) est prévu pour obtenir les coordonnées initiale et finale de la section défectueuse par ajout d'une première distance de décalage aux informations relatives à la valeur d'enroulement de l'électrode (1) reçue du contrôleur d'entraînement d'électrode (41), et transmettre les coordonnées initiale et finale obtenues de la section défectueuse au contrôleur de machine de marquage (42), la première distance de décalage étant une distance entre l'inspecteur de défauts (20) et l'enrouleur (RW).

12. Dispositif de marquage d'électrode (100) selon l'une des revendications 7 à 11, où l'électrode (1) comprend une pluralité de voies d'électrodes dans le sens de la largeur,
où l'une des machines de marquage (30) est prévue pour chaque voie de la pluralité de voies d'électrodes, et
chacune des machines de marquage (30) fait en continu des marques le long d'une section défectueuse de chaque voie de la pluralité de voies d'électrodes en fonction d'un signal commandant le commencement ou la fin du marquage, ledit signal étant reçu du contrôleur (40).
